(19) **Europäisches Patentamt / European Patent Office / Office européen des brevets**

(11) **EP 2 178 138 B1**

(12) **EUROPEAN PATENT SPECIFICATION**

(45) Date of publication and mention
of the grant of the patent:
**17.04.2013 Bulletin 2013/16**

(21) Application number: **08791482.6**

(22) Date of filing: **24.07.2008**

(51) Int Cl.:
*H01M 10/052* (2010.01)   *H01M 4/505* (2010.01)
*H01M 4/525* (2010.01)   *C01G 53/00* (2006.01)
*H01M 4/36* (2006.01)

(86) International application number:
**PCT/JP2008/063230**

(87) International publication number:
**WO 2009/014158 (29.01.2009 Gazette 2009/05)**

(54) **POSITIVE ELECTRODE ACTIVE MATERIAL FOR LITHIUM SECONDARY BATTERY, METHOD FOR PRODUCTION THEREOF, AND LITHIUM SECONDARY BATTERY**

POSITIVES AKTIVES ELEKTRODENMATERIAL FÜR EINE LITHIUMSEKUNDÄRBATTERIE, HERSTELLUNGSVERFAHREN DAFÜR UND LITHIUMSEKUNDÄRBATTERIE

MATÉRIAU ACTIF D'ÉLECTRODE POSITIVE POUR BATTERIE SECONDAIRE AU LITHIUM, SON PROCÉDÉ DE FABRICATION, ET BATTERIE SECONDAIRE AU LITHIUM

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **25.07.2007 JP 2007193933**

(43) Date of publication of application:
**21.04.2010 Bulletin 2010/16**

(73) Proprietor: **Nippon Chemical Industrial Co., Ltd.**
**Tokyo 136-8515 (JP)**

(72) Inventors:
• **FUKUCHI, Minoru**
**Tokyo 136-8515 (JP)**
• **AWANO, Hidekazu**
**Tokyo 136-8515 (JP)**
• **ANBE, Yuuki**
**Koriyama-shi**
**Fukushima 963-8812 (JP)**

(74) Representative: **Slingsby, Philip Roy**
**Page White & Farrer**
**Bedford House**
**John Street**
**London, WC1N 2BF (GB)**

(56) References cited:
**WO-A1-2006/101138    JP-A- 2004 111 076**
**JP-A- 2006 310 181    JP-A- 2007 027 100**

• **HE, P., WANG, H.B , QI, L.A , OSAKA, T.C: "Electrochemical characteristics of layered LiNi1/3Co1/3Mn1/3O2 and with different synthesis conditions", JOURNAL OF POWER SOURCES, vol. 160, no. 1, 28 February 2006 (2006-02-28), pages 627-632, XP002663435, DOI: 10.1016/j.jpowsour.2006.01.053**
• **WANG, C., MA, X., CHENG, J., ZHOU, L., SUN, J.E, ZHOU, Y.: "Effects of Ca doping on the electrochemical properties of LiNi0.8Co0.2O2 cathode material", SOLID STATE IONICS, vol. 177, no. 11-12, 2 May 2006 (2006-05-02), pages 1027-1031, XP002663436, DOI: 10.1016/j.ssi.2006.03.030**

EP 2 178 138 B1

**Description**

Technical Field

The present invention relates to a positive electrode active material for lithium secondary batteries, a method for producing the same, and particularly to a lithium secondary battery excellent in cycle characteristics and safety.

Background Art

As the rapid progress of portable and cordless home-use electronics in recent years, lithium-ion secondary batteries have been put in practical use as a power source of small electronic equipment such as laptop personal computers, cellular phones, and video cameras. Regarding the lithium-ion secondary battery, it has been reported by Mizushima et al. in 1980 ("Material Research Bulletin" vol.15, P.783-789 (1980)) that lithium cobaltate is useful as a positive electrode active material of a lithium-ion secondary battery. Since then, extensive research and development on a lithium-based composite oxide has been carried out, and a number of proposals have been made.

Lithium cobaltate has been studied from the earliest days as the positive electrode materials for lithium secondary batteries because it is relatively easily synthesized and has excellent electrical properties. However, lithium cobaltate has a drawback that raw material cobalt (Co) is rare and expensive, and it is not suitable for the increase of capacity because if it is charged with 0.7 electron or more, the crystallinity will be reduced and the electrolyte solution will be decomposed. On the other hand, although $LiNiO_2$ is advantageous in that it is less expensive than cobalt, it has been considered to have poorer capacitance characteristics than a Co-based material because it is liable to produce a defect and thereby reduce battery stability while in use as a positive electrode material for batteries. For this reason, $LiNiO_2$ which is close to the stoichiometric ratio as much as possible, a lithium composite oxide in which a part of nickel (Ni) is replaced with another transition metal, and a synthetic method thereof have been studied (for example, refer to Patent Documents 1 and 2).

However, $LiNiO_2$ and a lithium composite oxide in which a part of nickel (Ni) is replaced with another transition metal are liable to undergo gelation when kneaded with a binder resin, which causes a problem in kneading or coating properties. This is probably caused by a large amount of residual Li sources as an alkali source.

The present applicants have proposed to subject the surface of $LiNi_xCo_yMn_2O_2$ particles to fluorination treatment (the following Patent Documents 3 and 4) to solve the above problems.

Patent Document 1: Japanese Patent Laid-Open No. 04-106875
Patent Document 2: WO 2004/092073
Patent Document 3: Japanese Patent Laid-Open No. 2006-286240
Patent Document 4: Japanese Patent Laid-Open No. 2007-128719

WO 2006/101138 describes an active material for a lithium ion secondary battery.

Disclosure of the Invention

Problems to be Solved by the Invention

The present inventors have intensively studied to further improve gelation and coating properties at the time of mixing a Ni-based lithium composite oxide with a binder resin, and have found the following and completed the present invention: The positive electrode active material containing Ca atoms of the present invention can be produced by a method comprising: mixing a compound containing nickel, cobalt, a transition metal atom other than these and the like with a lithium compound and a calcium compound; and firing the resulting mixture, wherein a specific calcium compound is used and the amount of the calcium compound added is defined in a specific range. The positive electrode active material thus produced contains Ca atoms on the surface of the particles thereof, has a diffraction peak of CaO derived from the Ca atoms when the positive electrode active material is analyzed by X-ray diffraction, and has a reduced amount of residual $Li_2CO_3$ as a Li source. Further, a lithium secondary battery using the positive electrode active material is particularly excellent in cycle characteristics and safety.

That is, it is an object of the present invention to provide a positive electrode active material for lithium secondary batteries comprising a nickel-based lithium composite oxide which suppresses gelation when kneaded with a binder resin in producing a positive electrode material and provides excellent coating properties, and to provide a method for producing the same.

It is another object of the present invention to provide a lithium secondary battery excellent in cycle characteristics and safety due to reduction in generation of gas from the battery in use, using the above positive electrode active material.

Means for Solving the Problems

A first aspect of the present invention provides a positive electrode active material for lithium secondary batteries according to claim 1.

Further, a second aspect of the present invention provides a method for producing a positive electrode active material for lithium secondary batteries according to claim 4.

Further, a third aspect of the present invention provides a lithium secondary battery, characterized by using a positive electrode active material for lithium secondary batteries of the first aspect of the present invention.

Brief Description of the Drawings

Figure 1 is an X-ray diffraction pattern of the positive electrode active material obtained in Example 3;

Figure 2 is an X-ray diffraction pattern of the positive electrode active material obtained in Comparative Example 1; and

Figure 3 is a view showing an example of the neutralization titration curve of $Li_2CO_3$.

Best Mode for Carrying Out the Invention

Hereinafter, the present invention will be described based on the preferred embodiments thereof.

The positive electrode active material for lithium secondary batteries according to the present invention is characterized by comprising a lithium composite oxide represented by the following general formula (1):

$$Li_xNi_{1-y-z}Co_yMe_zO_2 \quad (1)$$

(wherein Me represents a metal element having an atomic number of 11 or more other than Co and Ni; and x, y, and z are represented by the formulae $0.98 \leq x \leq 1.20$, $0 < y \leq 0.5$, and $0 < z \leq 0.5$, respectively, provided that $y + z < 1$) and further containing Ca atoms, wherein the content of the Ca atoms is 0.04 to 2.1 wt.% based on the positive active material; and characterized in that when the positive electrode active material is analyzed by X-ray diffraction using Cu-K$\alpha$ radiation as a radiation source, the intensity ratio (b/a) of (b) the diffraction peak at $2\theta = 18.7 \pm 0.2°$ to (a) the diffraction peak at $2\theta = 37.4 \pm 0.2°$ derived from CaO is from 10 to 150. Note that the diffraction peak at (a) $2\theta = 37.4 \pm 0.2°$ belongs to CaO and corresponds to the plane (200).

The positive electrode active material for lithium secondary batteries of the present invention having the above described constitution suppresses gelation when kneaded with a binder resin in producing a positive electrode material and provides excellent coating properties, and can also impart particularly excellent cycle characteristics and safety to the lithium secondary battery using this positive electrode active material.

Alternatively, in the positive electrode active material for lithium secondary batteries of the present invention, a part of Ni atoms can be irreversibly replaced with Ca atoms by a production method to be described.

In the present invention, Me in the formula of the lithium composite oxide represented by the general formula (1) in which Ca atoms is contained represents a metal element having an atomic number of 11 or more other than Co and Ni. Preferred metal elements include one or more selected from among Mn, Al, Mg, Ti, Fe, and Zr. In the present invention, Mn atoms and/or Al atoms are particularly preferred as Me atoms in terms of improving safety of lithium secondary batteries.

Further, x in general formula (1) is in the range of $0.98 \leq x \leq 1.20$, and particularly preferably in the range of 1.0 or more and 1.1 or less because the initial discharge capacity of lithium secondary batteries tends to be high.

Further, y in the formula is in the range of $0 < y \leq 0.5$, and is particularly preferably in the range of more than 0 and 0.4 or less in terms of the safety of lithium secondary batteries.

Further, z in the formula is in the range of $0 < z \leq 0.5$, and particularly preferably in the range of more than 0 and 0.4 or less because the initial discharge capacity of lithium secondary batteries tends to be high.

The sum total of y and z, $y + z$, is less than 1, preferably from 0.1 to 0.7, particularly preferably 0.2.

In addition, the positive electrode active material containing Ca atoms of the present invention has an important constitutional feature as follows: When the positive electrode active material is analyzed by X-ray diffraction using Cu-K$\alpha$ radiation as a radiation source, the intensity ratio (b/a) of (b) the diffraction peak at $2\theta = 18.7 \pm 0.2°$ to (a) the diffraction peak at $2\theta = 37.4 \pm 0.2°$ derived from CaO is in the range of from 10 to 150, preferably from 50 to 130.

By setting the intensity ratio (b/a) of the diffraction peaks in the range as described above in the positive electrode active material of the present invention, the amount of residual $Li_2CO_3$ can be reduced, and the lithium secondary battery using this positive electrode active material has high initial discharge capacity and excellent cycle characteristics. On the other hand, if the intensity ratio (b/a) of the diffraction peaks exceeds 150, the resulting lithium secondary battery will not have sufficient cycle characteristics, and if the intensity ratio (b/a) is less than 10, the resulting lithium secondary battery will not have sufficient initial discharge capacity.

In the positive electrode active material of the present invention, the content of Ca atoms is from 0.04 to 2.1% by weight, preferably from 0.4 to 1.3% by weight. This is because there is a tendency that if the content of Ca atoms is less than 0.04% by weight, the resulting lithium secondary battery will not have sufficient cycle characteristics, and on the other hand, if the content of Ca atoms exceeds 2.1% by weight, the resulting lithium secondary battery will not have sufficient initial discharge capacity.

Moreover, it is preferred that the positive electrode active material containing Ca atoms be produced by mixing a compound containing nickel, cobalt, and Me atoms with a lithium compound and a calcium compound and firing the resulting mixture, because the content of $Li_2CO_3$ which is produced from a Li source by a reaction and remains in the positive electrode active material can be reduced, and in particular the lithium secondary battery using this positive electrode active material has improved cycle characteristics and safety. The amount of $Li_2CO_3$ remaining in the positive electrode active material is preferably reduced as much as possible because it causes generation of gas in the battery in use.

Furthermore, the positive electrode active material of the present invention preferably has an amount of free anions of 1.0% by weight or less, preferably 0.5% by weight or less. This is because there is a tendency that, if the amount of free anions exceeds 1.0% by weight, a trouble such as increase in viscosity will occur when synthesizing a positive plate. Note that in many cases, these free anions are derived from a calcium compound used as a raw material. Examples of the anions include phosphate ions, phosphite ions, and hypophosphite ions.

The positive electrode active material according to the present invention has an average particle size determined by a laser particle size distribution measurement method of from 1 to 30 $\mu$m, preferably from 5 to 25 $\mu$m. It is preferred that the average particle size be within these ranges because this allows a coating film having a uniform thickness to be formed. The positive electrode active material preferably has an average particle size of from 7 to 15 $\mu$m because the lithium secondary battery using this positive electrode active material has a balanced performance from the viewpoint of cycle characteristics and safety.

The positive electrode active material according to the present invention has a BET specific surface area of from 0.05 to 2 $m^2$/g, preferably from 0.15 to 1.0 $m^2$/g. The BET specific surface area is preferably within these ranges because a lithium secondary battery using this positive electrode active material is excellent in safety.

Subsequently, a method for producing the positive electrode active material for lithium secondary batteries of the present invention will be described. The method for producing the positive electrode active material for lithium secondary batteries of the present invention is a method comprising mixing a compound containing nickel, cobalt, and Me with a lithium compound and a calcium compound and firing the resulting mixture to produce a positive electrode active material containing Ca atoms, characterized in that one or more calcium compounds selected from the group consisting of calcium phosphate, calcium hydroxide, calcium hydrogen phosphate, calcium carbonate, calcium hypophosphite, and calcium phosphite are used as the calcium compound; and the amount of the calcium compound added is determined in the range of from 0.001 to 0.05 in terms of the molar ratio (Ca/M) of Ca atoms in the calcium compound to the total amount (M) of Ni atoms, Co atoms, and Me atoms in the compound containing the nickel, cobalt, and Me atoms.

The method of the present invention comprises furthermore a multistage firing including a firing at a temperature in the range of 200 to 400°C followed by a firing at a temperature in the range of 700 to 900°C.

Examples of the compound containing nickel, cobalt, and Me atoms preferably used as the first raw material preferably include a composite hydroxide, a composite oxyhydroxide, a composite carbonate, and a composite oxide. The composite hydroxide can be prepared, for example, with a coprecipitation method. Specifically, the composite oxide can be coprecipitated by mixing an aqueous solution containing nickel, cobalt, and Me atoms, an aqueous solution of a complexing agent, and an aqueous alkali solution (refer to Japanese Patent Laid Open No. 10-81521, Japanese Patent Laid Open No. 10-81520, Japanese Patent Laid Open No. 10-29820, and Japanese Patent Laid Open No. 2002-201028). When a composite oxyhydroxide is used, the composite oxyhydroxide can be obtained by yielding a precipitate of the composite hydroxide according to the above-described coprecipitation operation followed by blowing air into the reaction mixture to oxidize the composite oxide. When a composite oxide is used, the composite oxide can be obtained by yielding a precipitate of the composite hydroxide according to the above-described coprecipitation operation followed by heat-treating the precipitate, for example, at 200 to 500°C. When a composite carbonate is used, the composite carbonate can be obtained by preparing the aqueous solution containing nickel, cobalt, and Me atoms and the aqueous solution of a complexing agent in the same manner as in the above-described coprecipitation operation and mixing the resulting aqueous solutions with the aqueous alkali solution as an aqueous solution of alkali carbonate or alkali hydrogen carbonate. It is particularly preferred that the compound containing nickel, cobalt, and Me atoms have an average particle size as determined by a laser light scattering method of from 1 to 30.0 $\mu$m, preferably from 5.0 to 25.0 $\mu$m because such a compound has good reactivity.

The preferred composition of the compound containing nickel, cobalt, and Me atoms is the molar ratio of y and z in the formula of the lithium composite oxide represented by general formula (1) as described above. The compound containing nickel, cobalt, and Me atoms may be a commercially available product.

Examples of the lithium compound used as the second raw material include an oxide, a hydroxide, a carbonate, a nitrate, and an organic acid salt of lithium. Among these, lithium hydroxide is particularly preferably used from the viewpoint of its reactivity with the compound containing nickel, cobalt, and Me atoms used as the first raw material. It is particularly preferred that the lithium compound have an average particle size as determined by a laser light scattering method of from 1 to 100 $\mu$m, preferably from 5 to 80 $\mu$m because such a compound has good reactivity.

The calcium compound used as the third raw material is a component for reducing the residual $Li_2CO_3$ in the positive electrode active material of the present invention. The calcium compound comprises calcium phosphate, calcium hydroxide, calcium hydrogen phosphate, calcium carbonate, calcium hypophosphite, and calcium phosphite. Among these, calcium phosphate and calcium hydroxide are preferred in that these compounds are highly effective in reducing the amount of residual $Li_2CO_3$ and can impart excellent cycle characteristics and safety to the lithium secondary batteries using the positive electrode active material of the present invention. The physical properties and the like of the calcium compound is not limited, but it is particularly preferred that the calcium compound have an average particle size as determined by a laser light scattering method of from 1 to 30 $\mu$m, preferably from 5 to 10 $\mu$m because such a compound has good reactivity and is significantly effective in reducing the amount of residual $Li_2CO_3$.

Note that the compound containing nickel, cobalt, and Me atoms, the lithium compound, and the calcium compound used as the first to third raw materials, respectively, preferably have an impurity content as low as possible in order to produce a high purity positive electrode active material.

The positive electrode active material for lithium secondary batteries of the present invention can be obtained by firing a mixture comprising the compound containing nickel, cobalt, and Me atoms as the first raw material, the lithium compound as the second raw material, and the calcium compound as the third raw material so that the amount of the calcium compound added is determined in a specific range.

In the reaction operation, the compound containing nickel, cobalt, and Me atoms as the first raw material, the lithium compound as the second raw material, and the calcium compound as the third raw material are mixed in a predetermined ratio. The mixing may be a dry process or a wet process, but a dry process is preferred because production is simple. In the case of dry blending, it is preferable to use a blender or the like so that raw materials are uniformly mixed.

The blending ratio of the first raw material and the third raw material is determined so that the ratio of calcium atoms (Ca) in the calcium compound as the third raw material to the total amount (M) of nickel, cobalt, and Me atoms in the compound containing nickel, cobalt, and Me atoms as the first raw material is in the range of from 0.001 to 0.05, preferably from 0.005 to 0.03 in terms of the molar ratio (Ca/M). In the present invention, the amount of residual $Li_2CO_3$ is reduced to 0.5% by weight or less, preferably to 0.4% by weight or less, most preferably to 0.3% by weight or less by determining the amount of Ca atoms blended in the above-described range. The resulting lithium secondary battery using such a positive electrode active material is particularly excellent in cycle characteristics and safety. On the other hand, if the molar ratio (Ca/M) of Ca atoms is less than 0.001, the resulting lithium secondary battery will not have good cycle characteristics, and if the molar ratio (Ca/M) of Ca atoms exceeds 0.05, the resulting lithium secondary battery will have a reduced initial discharge capacity. Therefore, these molar ratios are not preferred.

The ratio of lithium atoms (Li) in the lithium compound as the second raw material to the total amount (M) of nickel, cobalt, and Me atoms in the compound containing nickel, cobalt, and Me atoms as the first raw material is preferably determined in the range of from 0.98 to 1.2, preferably from 1.0 to 1.1 in terms of the molar ratio (Li/M). In the present invention, the resulting lithium secondary battery using such a positive electrode active material has high discharge capacity and is excellent in cycle characteristics by determining the amount of Li atoms blended in the above-described range. On the other hand, if the molar ratio of Li atoms is less than 0.98, the resulting lithium secondary battery tends to show a rapid reduction in the initial discharge capacity, and if the molar ratio of Li atoms exceeds 1.2, the resulting lithium secondary battery tends to have a reduced cycle characteristics. Therefore, these molar ratios are not preferred.

Subsequently, a mixture in which the raw materials are uniformly mixed is fired. In the present invention, the mixture is fired in the air or in an oxygen environment by multistage firing. The mixture is slowly fired at a temperature range of about 200 to 400°C where moisture contained in the raw materials disappears and then rapidly heated to a temperature range of 700 to 900°C followed by being fired for 1 to 30 hours. In the present invention, the firing may be performed any number of times as needed. Alternatively, a fired mixture is ground, and then the ground fired mixture may be fired again for the purpose of obtaining uniform powder characteristics.

The mixture is fired and then appropriately cooled, and the cooled mixture is ground as needed to obtain the positive electrode active material of the present invention. Note that, the grinding performed as needed is appropriately performed when the positive electrode active material obtained by firing is a weakly combined block like material, and the particle of the positive electrode active material itself has the following specific average particle size and specific BET specific surface area. Specifically, the resulting positive electrode active material containing Ca has an average particle size of from 1 to 30 $\mu$m, preferably from 5 to 25 $\mu$m, and a BET specific surface area of from 0.05 to 2.0 $m^2$/g, preferably from 0.15 to 1.0 $m^2$/g.

The positive electrode active material of the present invention obtained in this way has the above powder characteristics. In addition, in the positive electrode active material of the present invention, the content of Ca atoms is in the range of from 0.04 to 2.1% by weight, preferably from 0.4 to 1.3% by weight based on the positive electrode active material; when the positive electrode active material is analyzed by X-ray diffraction using Cu- K$\alpha$ radiation as a radiation source, the intensity ratio (b/a) of (b) the diffraction peak around $2\theta$ = 18.4 to (a) the diffraction peak at $2\theta$ = 37.4 $\pm$ 0.2° derived from CaO is within the range of from 10 to 150, preferably from 50 to 130; and the content of free anions is 1.0% by weight or less, preferably 0.5% by weight or less according to the preferred embodiment of the present invention.

The lithium secondary battery according to the present invention uses the above positive electrode active material for lithium secondary batteries and comprises a positive electrode, a negative electrode, a separator, and a nonaqueous electrolyte containing a lithium salt. The positive electrode is formed, for example, by coating and drying a positive electrode mixture on a positive electrode current collector. The positive electrode mixture comprises a positive electrode active material as described above, a conducting agent, a binder, and a filler to be added as needed. The lithium secondary battery according to the present invention has a positive electrode on which the positive electrode active material as described above is uniformly applied. Therefore, the lithium secondary battery according to the present invention hardly causes reduction in load characteristics and cycle characteristics.

Desirably, the content of the positive electrode active material in the positive electrode mixture is from 70 to 100% by weight, preferably 90 to 98% by weight.

The positive electrode current collector is not particularly limited as long as it is an electronic conductor which does not cause a chemical change in a constituted battery. Examples of the positive electrode current collector include stainless steel, nickel, aluminum, titanium, baked carbon, and those prepared by surface-treating the surface of aluminum or stainless steel with carbon, nickel, titanium, or silver. These materials may be used in the state where the surface thereof is oxidized, or may be used in the state where the surface of the current collector is imparted with unevenness by surface treatment. Examples of the form of the current collector include foil, film, sheet, net, punched product, lath body, porous material, foam, fiber, and molded product of nonwoven fabric. The thickness of the current collector is not particularly limited, and is preferably in the range of from 1 to 500 $\mu$m.

The conducting agent is not particularly limited as long as it is an electronic conducting material which does not cause a chemical change in a constituted battery. Examples of the conducting agent include graphite such as natural graphite and artificial graphite, carbon blacks such as carbon black, acetylene black, Ketchen black, channel black, furnace black, lamp black, and thermal black, conductive fibers such as carbon fiber and metal fiber, metal powders such as carbon fluoride, aluminum, and nickel powder, conductive whiskers such as zinc oxide and potassium titanate, conductive metal oxide such as titanium oxide, and conductive materials such as a polyphenylene derivative. Examples of the natural graphite include flaky graphite, scaly graphite, and earthy graphite. These can be used independently or in combination of two or more. The compounding ratio of the conducting agent in the positive electrode mixture is from 1 to 50% by weight, preferably from 2 to 30% by weight.

Examples of the binder include polysaccharide, thermoplastic resins, and polymers having rubber elasticity such as starch, polyvinylidene fluoride, polyvinyl alcohol, carboxymethylcellulose, hydroxypropylcellulose, regenerated cellulose, diacetyl cellulose, polyvinyl pyrrolidone, tetrafluoroethylene, polyethylene, polypropylene, an ethylene-propylene-diene terpolymer (EPDM), sulfonated EPDM, styrene butadiene rubber, fluororubber, a tetrafluoroethylene-hexafluoroethylene copolymer, a tetrafluoroethylene-hexafluoropropylene copolymer, a tetrafluoroethylene-perfluoroalkyl vinyl ether copolymer, a vinylidene fluoride-hexafluoropropylene copolymer, a vinylidene fluoride-chlorotrifluoroethylene copolymer, an ethylene-tetrafluoroethylene copolymer, polychlorotrifluoroethylene, a vinylidene fluoride-pentafluoropropylene copolymer, a propylene-tetrafluoroethylene copolymer, an ethylene-chlorotrifluoroethylene copolymer, a vinylidene fluoride hexafluoropropylene-tetrafluoroethylene copolymer, a vinylidene fluoride-perfluoromethyl vinyl ether-tetrafluoroethylene copolymer, an ethylene-acrylic acid copolymer or its (Na$^+$) ion crosslinked body, an ethylene-methacrylic acid copolymer or its (Na$^+$) ion crosslinked body, an ethylene-methyl acrylate copolymer or its (Na$^+$) ion crosslinked body, an ethylene-methyl methacrylate copolymer or its (Na$^+$) ion crosslinked body, and polyethylene oxide. These can be used independently or in combination of two or more. Note that, when using a compound containing a functional group which reacts with lithium such as polysaccharide, it is preferable to add a compound, such as a compound containing an isocyanate group, to deactivate the functional group. The compounding ratio of the binder in the positive electrode mixture is from 1 to 50% by weight, preferably from 5 to 15% by weight.

The filler suppresses the volume expansion of the positive electrode in the positive electrode mixture, and is added as needed. Any filler can be used as long as it is a fibrous material which does not cause a chemical change in a constituted battery. Examples of the filler to be used include fibers of an olefinic polymer such as polypropylene and polyethylene, glass, carbon, and the like. The amount of the filler to be added is not particularly limited, and is preferably from 0 to 30% by weight in the positive electrode mixture.

The negative electrode is formed by coating and drying a negative electrode material on a negative electrode current collector. The negative electrode current collector is not particularly limited as long as it is an electronic conductor which does not cause a chemical change in a constituted battery. Examples of the negative electrode current collector include stainless steel, nickel, copper, titanium, aluminum, baked carbon, those prepared by surface-treating the surface of copper or stainless steel with carbon, nickel, titanium, or silver, and an aluminum-cadmium alloy. Further, these materials may be used in the state where the surface thereof is oxidized, or may be used in the state where the surface of the current collector is imparted with unevenness by surface treatment. Examples of the form of the current collector include foil, film, sheet, net, punched product, lath body, porous material, foam, fiber, and molded product of nonwoven fabric. The thickness of the current collector is, but is not particularly limited, preferably in the range of from 1 to 500 $\mu$m.

Examples of the negative electrode material include, but are not particularly limited to, a carbonaceous material, a metal composite oxide, a lithium metal, a lithium alloy, a silicon-based alloy, a tin-based alloy, a metal oxide, a conductive polymer, a chalcogen compound, and a Li-Co-Ni-based material. Examples of the carbonaceous material include a non-graphitizable carbon material and a graphite-based carbon material. Examples of the metal composite oxide include compounds such as $Sn_p(M^1)_{1-p}(M^2)_qO_r$ (wherein $M^1$ represents one or more elements selected from Mn, Fe, Pb, and Ge; $M^2$ represents one or more elements selected from Al, B, P, Si, Group 1 elements, Group 2 elements, and Group 3 elements of the Periodic Table, and halogen elements; and p, q, and r are represented by the formulae $0 < p \leq 1$, $1 \leq q \leq 3$, and $1 \leq r \leq 8$, respectively), $Li_xFe_2O_3$ ($0 \leq x \leq 1$), and $Li_xWO_2$ ($0 \leq x \leq 1$). Examples of the metal oxide include GeO, $GeO_2$, SnO, $SnO_2$, PbO, $PbO_2$, $Pb_2O_3$, $Pb_3O_4$, $Sb_2O_3$, $Sb_2O_4$, $Sb_2 2O_5$, $Bi_2O_3$, $Bi_2O_4$, and $Bi_2O_5$. Examples of the conductive polymer include polyacethylene and poly-p-phenylene.

As the separator, there is used an insulating thin film having high ion permeability and a predetermined mechanical strength. An olefinic polymer such as polypropylene, or glass fiber, or a sheet or nonwoven fabric made of polyethylene or the like is used because these materials have organic solvent resistance and hydrophobicity. The pore size of the separator may be generally within the range useful for batteries, and it is, for example, from 0.01 to 10 $\mu$m. The thickness of the separator may be within the general range for batteries, and it is, for example, from 5 to 300 $\mu$m. Note that, when a solid electrolyte such as a polymer is used as an electrolyte to be described below, the solid electrolyte may also be used as the separator.

The nonaqueous electrolyte containing a lithium salt comprises a nonaqueous electrolyte and a lithium salt. As the nonaqueous electrolyte, there is used a nonaqueous electrolyte solution, an organic solid electrolyte, and an inorganic solid electrolyte. Examples of the nonaqueous electrolyte solution include an aprotic organic solvent such as N-methyl-2-pyrrolidinone, propylene carbonate, ethylene carbonate, butylene carbonate, dimethyl carbonate, diethyl carbonate, $\gamma$-butyrolactone, 1,2-dimethoxyethane, tetrahydroxyfuran, 2-methyltetrahydrofuran, dimethylsulfoxide, 1,3-dioxolane, formamide, dimethylformamide, dioxolane, acetonitrile, nitromethane, methyl formate, methyl acetate, trialkyl phosphate, trimethoxymethane, a dioxolane derivative, sulfolane, methyl sulfolane, 3-methyl-2-oxazolidinone, 1,3-dimethyl-2-imidazolidinone, a propylene carbonate derivative, a tetrahydrofuran derivative, diethyl ether, 1,3-propane sultone, methyl propionate, and ethyl propionate, and a solvent obtained by mixing two or more of the above aprotic organic solvents.

Examples of the organic solid electrolyte include a polymer containing an ionic dissociation group such as a polyethylene derivative, a polyethylene oxide derivative or a polymer containing the same, a polypropylene oxide derivative or a polymer containing the same, a phosphoric ester polymer, polyphosphazene, polyaziridine, polyethylene sulfide, polyvinyl alcohol, polyvinylidene fluoride, and polyhexafluoropropylene, and a mixture of the polymer containing an ionic dissociation group and the above nonaqueous electrolyte solution.

As the inorganic solid electrolyte, there can be used a Li nitride, a Li halide, an oxyacid salt of Li, a Li sulfide, and the like. Examples of the inorganic solid electrolyte include $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, $P_2S_5$, $Li_2S$ or $Li_2S$-$P_2S_5$, $Li_2S$-$SiS_2$, $Li_2S$-$GeS_2$, $Li_2S$-$Ga_2S_3$, $Li_2S$-$B_2S_3$, $Li_2S$-$P_2S_5$-X, $Li_2S$-$SiS_2$-X, $Li_2S$-$GeS_2$-X, $Li_2S$-$Ga_2S_3$-X, $Li_2S$-$B_2S_3$-X, wherein X represents at least one or more selected from LiI, $B_2S_3$, and $Al_2S_3$.

When the inorganic solid electrolyte is an amorphous material (glass), the following compounds can be contained in the inorganic solid electrolyte: compounds containing oxygen such as lithium phosphate ($Li_3PO_4$), lithium oxide ($Li_2O$), lithium sulfate ($Li_2SO_4$), phosphorus oxide ($P_2O_5$), and lithium borate ($Li_3BO_3$); and compounds containing nitrogen such as $Li_3PO_{4-x}N_{2x/3}$ (wherein x is represented by the formula $0 < x < 4$), $Li_4SiO_{4-x}N_{2x/3}$ (wherein x is represented by the formula $0 < x < 4$), $Li_4GeO_{4-x}N_{2x/3}$ (wherein x is represented by the formula $0 < x < 4$), and $Li_3BO_{3-x}N_{2x/3}$ (wherein x is represented by the formula $0 < x < 3$). Addition of the compounds containing oxygen or the compounds containing nitrogen will increase the clearance between the amorphous skeletons to be formed, thereby capable of reducing the hindrance to the movement of lithium ions and improving ion conductivity.

As the lithium salt, there is used a material which is dissolved in the above nonaqueous electrolyte. Examples of the lithium salt include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiB_{10}Cl_{10}$, $LiAlCl_4$, $CH_3SO_3Li$, $CF_3SO_3Li$, $(CF_3SO_2)_2NLi$, chloroborane lithium, lower aliphatic carboxylic acid lithium, 4-phenyl lithium borate, and imides, and a salt obtained by mixing two or more of the above lithium salts.

Further, the following compounds can be added to the nonaqueous electrolyte in order to improve discharge and charge characteristics and flame retardancy. Examples include pyridine, triethyl phosphite, triethanolamine, cyclic ether, ethylenediamine, n-glyme, hexaphosphoric triamide, a nitrobenzene derivative, sulfur, a quinoneimine dye, N-substituted oxazolidinone and N,N-substituted imidazolidine, ethylene glycol dialkyl ether, an ammonium salt, polyethylene glycol, pyrrole, 2-methoxyethanol, aluminum trichloride, a monomer for a conductive polymer electrode active material, triethylene phosphonamide, trialkylphosphine, morpholine, an aryl compound having a carbonyl group, hexamethylphosphoric triamide and 4-alkyl morpholine, bicyclic tertiary amine, oil, a phosphonium salt and a tertiary sulfonium salt, phosphazene, and carbonate. In order to impart incombustibility to the electrolyte solution, it can further contain a halogen-containing solvent such as carbon tetrachloride and ethylene trifluoride. Further, in order to improve high-temperature storage characteristics, the electrolyte solution can contain carbon dioxide gas.

The lithium secondary battery according to the present invention is a lithium secondary battery excellent in battery performance, particularly cycle characteristics, and the shape of the battery may be any shape, such as a button, a sheet, a cylinder, a square, and a coin type.

Examples of the applications of the lithium secondary battery according to the present invention include, but are not particularly limited to, electronic equipment such as notebook personal computers, laptop personal computers, pocket word processors, cellular phones, cordless phone units, portable CD players, radios, liquid crystal televisions, backup power supply, electric shavers, memory cards, and video movies, and consumer electronics for automobiles, motorized vehicles, game machines, and the like.

The positive electrode active material according to the present invention can reduce the amount of residual $Li_2CO_3$ as a Li source, but it is not clear how this effect is obtained. Probably, when a specific calcium compound is used and fired together with a raw material mixture, the reactivity of the lithium compound used as a raw material is improved, or the residual $Li_2CO_3$ is efficiently decomposed.

Examples

Hereinafter, the present invention will be described in detail with reference to Examples, but the present invention is not limited to these.

<Compounds containing nickel, cobalt, and Me atoms>

In Examples of the present invention, commercially available composite hydroxides containing nickel, cobalt, and manganese atoms (manufactured by Tanaka Chemical Corporation) each having the composition shown in the following Table 1 were used as the compound containing nickel, cobalt, and Me atoms. Note that the average particle size was determined by a laser particle size distribution measurement method.

Table 1

| Samples | Physical properties of composite hydroxides |
|---|---|
| A | Molar ratio of Ni:Co:Mn=0.8.0.10:0.10 Average particle size;10.5 $\mu$m |
| B | Molar ratio of Ni:Co:Mn=0.6:0.20:0.20 Average particle size;10.9 $\mu$m |
| C | Molar ratio of Ni:Co:Al=0.82:0.15:0.03 Average particle size;7.5 $\mu$m |

<Added compounds>

The calcium compounds and barium compounds having various physical properties as shown in Table 2 were used as the added compounds. Note that the average particle size was determined by a laser particle size distribution measurement method.

Table 2

| Samples | Type of calcium compound and barium compound | Average particle size ($\mu$m) |
|---|---|---|
| 1-1 | $Ca_3(PO_4)_2$ | 7.9 |
| 1-2 | $Ca(OH)_2$ | 22.5 |
| 1-3 | $BaHPO_4$ | 55.8 |
| 1-4 | $Ba(OH)_2 \cdot 8H_2O$ | Granular |

8

Note) As $Ca_3(PO_4)_2$ and $Ca(OH)_2$, there were used those manufactured by Junsei Chemical Co., Ltd. As $BaHPO_4$ and $Ba(OH)_2 \cdot 8H_2O$, there were used those manufactured by Kanto Chemical Co., Inc.

Examples 1 to 3 and Comparative Examples 1 to 5

A composite hydroxide containing nickel, cobalt, and manganese atoms shown in Table 3, lithium hydroxide monohydrate (average particle size; 74 $\mu$m), and the above calcium phosphate were mixed in an amount as shown in Table 3 and sufficiently dry-blended to obtain a homogeneous mixture of these raw materials. Subsequently, the mixture was heated to 300°C in 1 hour, maintained at this temperature for 2 hours, heated to 850°C in 5 hours, and maintained at this temperature for 7 hours, followed by firing the resulting mixture in the air. A fired material obtained by completing the firing and then cooling the fired mixture was ground and classified to obtain a positive electrode active material comprising $Li_{1.03}Ni_{0.8}Co_{0.1}Mn_{0.1}O_2$ and Ca atoms contained therein.
Note that positive electrode active materials to which calcium phosphate is not added were prepared as Comparative Examples 1, 4, and 5.

Examples 4 to 7

A composite hydroxide containing nickel, cobalt, and manganese atoms shown in Table 3, lithium hydroxide monohydrate (average particle size; 74 $\mu$m), and the above calcium hydroxide were mixed in an amount as shown in Table 3 and sufficiently dry-blended to obtain a homogeneous mixture of these raw materials. Subsequently, the mixture was heated to 300°C in 1 hour, maintained at this temperature for 2 hours, heated to 850°C in 5 hours, and maintained at this temperature for 7 hours, followed by firing the resulting mixture in the air. A fired material obtained by completing the firing and then cooling the fired mixture was ground and classified to obtain a positive electrode active material comprising $Li_{1.03}Ni_{0.8}Co_{0.1}Mn_{0.1}O_2$ and Ca atoms contained therein.
Table 3

| | Type of composite hydroxide | Type of calcium compound | Molar ratio | | | | |
|---|---|---|---|---|---|---|---|
| | | | Ni | Co | Mn | Li | Ca |
| Example 1 | A | 1-1 | 0.8 | 0.1 | 0.1 | 1.03 | 0.01 |
| Example 2 | A | 1-1 | 0.8 | 0.1 | 0.1 | 1.03 | 0.02 |
| Example 3 | A | 1-1 | 0.8 | 0.1 | 0.1 | 1.03 | 0.03 |
| Example 4 | A | 1-2 | 0.8 | 0.1 | 0.1 | 1.03 | 0.01 |
| Example 5 | A | 1-2 | 0.8 | 0.1 | 0.1 | 1.03 | 0.02 |
| Example 6 | A | 1-2 | 0.8 | 0.1 | 0.1 | 1.03 | 0.03 |
| Example 7 | A | 1-2 | 0.8 | 0.1 | 0.1 | 1.03 | 0.05 |
| Example 8 | B | 1-1 | 0.6 | 0.2 | 0.2 | 1.03 | 0.02 |
| Example 9 | B | 1-1 | 0.6 | 0.2 | 0.2 | 1.05 | 0.02 |
| Comparative Example 1 | A | - | 0.8 | 0.1 | 0.1 | 1.03 | - |
| Comparative Example 2 | A | 1-1 | 0.8 | 0.1 | 0.1 | 1.03 | 0.0005 |
| Comparative Example 3 | A | 1-1 | 0.8 | 0.1 | 0.1 | 1.03 | 0.07 |
| Comparative Example 4 | A | - | 0.6 | 0.2 | 0.2 | 1.03 | - |
| Comparative Example 5 | A | - | 0.6 | 0.2 | 0.2 | 1.05 | - |

Comparative Examples 6 to 8

A composite hydroxide containing nickel, cobalt, and manganese atoms shown in Table 4, lithium hydroxide monohydrate (average particle size; 74 μm), and a barium hydroxide as described above were mixed in an amount as shown in Table 3 and sufficiently dry-blended to obtain a homogeneous mixture of these raw materials. Subsequently, the mixture was heated to 300°C in 1 hour, maintained at this temperature for 2 hours, heated to 850°C in 5 hours, and maintained at this temperature for 7 hours, followed by firing the resulting mixture in the air. A fired material obtained by completing the firing and then cooling the fired mixture was ground and classified to obtain a positive electrode active material comprising $Li_{1.03}Ni_{0.8}Co_{0.1}Mn_{0.1}O_2$ and Ba atoms contained therein.

Table 4

|  | Type of composite hydroxide | Type of barium compound | Molar ratio | | | | |
|---|---|---|---|---|---|---|---|
|  |  |  | Ni | Co | Mn | Li | Ba |
| Comparative Example 6 | A | 1-3 | 0.8 | 0.1 | 0.1 | 1.03 | 0.02 |
| Comparative Example 7 | A | 1-3 | 0.8 | 0.1 | 0.1 | 1.03 | 0.03 |
| Comparative Example 8 | A | 1-4 | 0.8 | 0.1 | 0.1 | 1.03 | 0.03 |

Example 10 and Comparative Example 9

The above composite hydroxide containing nickel, cobalt, and aluminum atoms, lithium hydroxide monohydrate (average particle size; 74 μm), and the above calcium hydroxide were mixed in an amount as shown in Table 5 and sufficiently dry-blended to obtain a homogeneous mixture of these raw materials. Subsequently, the mixture was heated to 300°C in 1 hour, maintained at this temperature for 2 hours, heated to 850°C in 5 hours, and maintained at this temperature for 7 hours, followed by firing the resulting mixture in the air. A fired material obtained by completing the firing and then cooling the fired mixture was ground and classified to obtain a positive electrode active material comprising $Li_{1.01}Ni_{0.82}Co_{0.15}Al_{0.03}O_2$ and Ca atoms contained therein.

In addition, a positive electrode active material to which a calcium compound is not added was prepared as Comparative Example 9.

Table 5

|  | Type of composite hydroxide | Type of calcium compound | Molar ratio | | | | |
|---|---|---|---|---|---|---|---|
|  |  |  | Ni | Co | Al | Li | Ca |
| Example 10 | C | 1-1 | 0.82 | 0.15 | 0.03 | 1.01 | 0.02 |
| Comparative Example 9 | C | - | 0.8 | 0.1 | 0.1 | 1.03 | - |

<Evaluation of physical properties of positive electrode active materials>

The positive electrode active materials obtained in Examples 1 to 10 and Comparative Examples 1 to 9 were determined for the average particle size, the BET specific surface area, and the residual $Li_2CO_3$ content, and were analyzed by X-ray diffraction using Cu-Kα radiation as a radiation source to determine the intensity ratio (b/a) of (b) the diffraction peak at 2θ = 18.7 ± 0.2° to (a) the diffraction peak at 2θ = 37.4 ± 0.2° derived from CaO. Note that the average particle size was determined by a laser particle size distribution measurement method, and the results are shown in Table 6. Note that the residual $Li_2CO_3$ content was measured as described below.

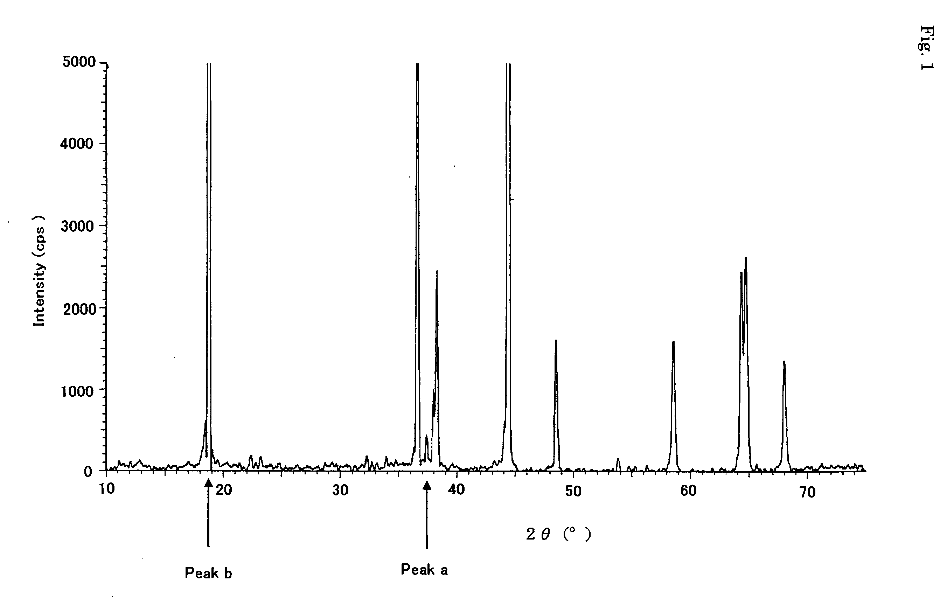

The X-ray diffraction pattern of the positive electrode active material obtained in Example 3 is shown in Figure 1. In Figure 1, the intensity of (a) the diffraction peak at 2θ = 37.4 ± 0.2° is 435, and the intensity of (b) the diffraction peak at 2θ = 18.7 ± 0.2° is 18,110. The intensity ratio (b/a) is 42.

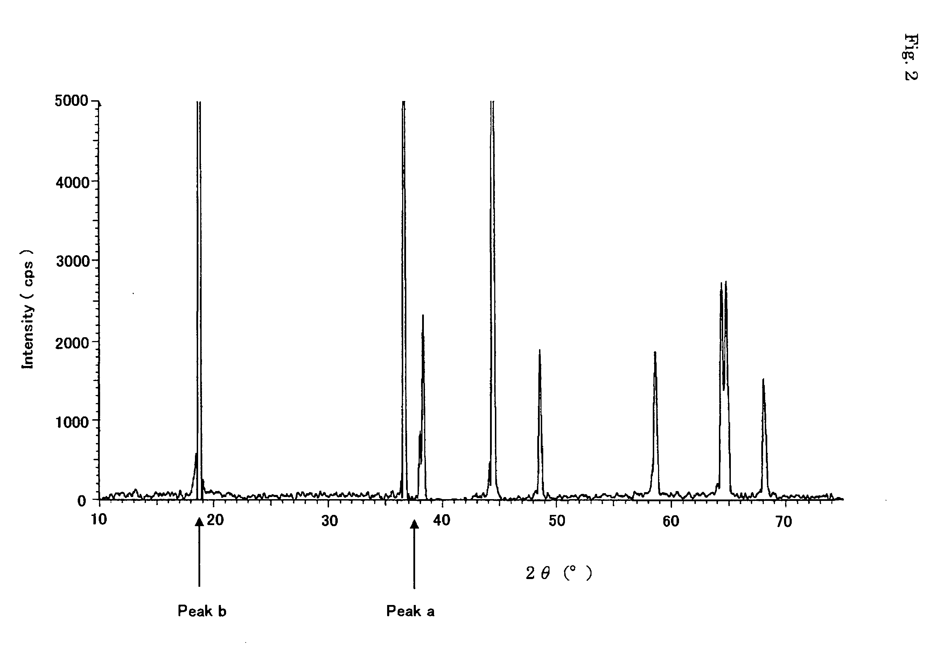

The X-ray diffraction pattern of the positive electrode active material obtained in Comparative Example 1 is shown in Figure 2. The intensity of (a) the diffraction peak at $2\theta = 37.4 \pm 0.2°$ in Figure 2 was not able to be detected.

(1) The conditions of X-ray diffraction analysis Radiation source: Cu-K$\alpha$ radiation

Voltage: 40 kV
Electric current: 40 mA
Step size: 0.042354°
Time/Step: 0.5 s

(2) Evaluation of residual $Li_2CO_3$ content

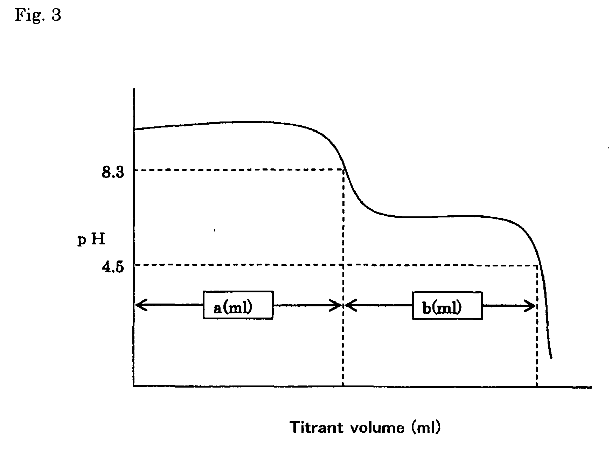

Five grams of a positive electrode active material sample and 100 g of pure water were measured into a beaker and dispersed for 5 minutes using a magnetic stirrer. Subsequently, the resulting dispersion was filtered and 30 ml of the resulting filtrate was titrated with 0.1 N hydrochloric acid to determine the first end point (pH 8.3; (a) ml) and the second end point (pH 4.5; (b) ml). The residual $Li_2CO_3$ content was calculated by the following calculation formula. Note that an example of the neutralization titration curve is shown in Figure 3.

```
Li₂CO₃ content = {the amount of pure water (g)/the

amount of filtrate (g)} × 2 × (b/1000) × (normality ×

factor of hydrochloric acid titrant) × (1/2) × (molecular

weight of Li₂CO₃) × (100/the amount of sample (g) =

(100/30) × 2 × (b/1000) × 0.1 × 0.5 × 73.812 × (100/5)
```

(3) Evaluation of Ca content

The Ca content was determined by ICP-atomic emission spectrometry.

Table 6

|  | Ca content (% by weight) | Average particle size ($\mu$m) | BET specific surface area($m^2$/ g) | $LiCO_3$ content (% by weight) | Peak intensity ratio |
|---|---|---|---|---|---|
| Example 1 | 0.4 | 10.7 | 0.45 | 0.39 | 106 |
| Example 2 | 0.86 | 11.8 | 0.43 | 0.11 | 79 |
| Example 3 | 1.26 | 12 | 0.43 | 0.19 | 42 |
| Example 4 | 0.44 | 10.4 | 0.4 | 0.29 | 100 |
| Example 5 | 0.83 | 11.1 | 0.58 | 0.15 | 60 |
| Example 6 | 1.3 | 11.5 | 0.36 | 0.12 | 40 |
| Example 7 | 2 | 12.1 | 0.32 | 0.14 | 28 |
| Example 8 | 0.84 | 10.5 | 0.45 | 0.11 | 65 |
| Example 9 | 0.84 | 10.8 | 0.5 | 0.14 | 60 |
| Example 10 | 1.33 | 8.9 | 0.71 | 0.26 | 68 |
| Comparative Example 1 | 0.005 | 12 | 0.43 | 0.94 | - |

(continued)

| | Ca content (% by weight) | Average particle size (μm) | BET specific surface area(m²/ g) | LiCO₃ content (% by weight) | Peak intensity ratio |
|---|---|---|---|---|---|
| Comparative Example 2 | 0.02 | 11.7 | 0.44 | 0.9 | 200 |
| Comparative Example 3 | 2.9 | 14 | 0.38 | 0.15 | 8 |
| Comparative Example 4 | 0.005 | 10 | 0.48 | 0.82 | - |
| Comparative Example 5 | 0.005 | 10.2 | 0.52 | 1.27 | - |
| Comparative Example 6 | 0.005 | 13.3 | 0.41 | 0.41 | - |
| Comparative Example 7 | 0.005 | 13.9 | 0.42 | 0.21 | - |
| Comparative Example 8 | 0.005 | 12.4 | 0.42 | 0.27 | - |
| Comparative Example 9 | 0.002 | 9 | 0.63 | 1.73 | - |
| (Note) "-" in the table represents that the diffraction peak at 2θ = 37.4 ± 0.2° derived from CaO was not detected. | | | | | |

<Evaluation of lithium secondary battery>

(1) Preparation of lithium secondary battery

A positive electrode agent was prepared by mixing 91% by weight of a lithium-transition metal composite oxide obtained in any one of Examples 1 to 10 and Comparative Examples 1 to 9, 6% by weight of graphite powder, and 3% by weight of polyvinylidene fluoride, and the resulting positive electrode agent was dispersed in N-methyl-2-pyrrolidinone to prepare a kneaded paste. This kneaded paste was applied to aluminum foil, dried, and punched into a disk with a diameter of 15 mm by pressing to obtain a positive plate.

A lithium secondary battery was manufactured by using this positive plate and using members such as a separator, a negative electrode, a positive electrode, a current collector plate, fittings, an external terminal, and an electrolyte solution. Among these, metal lithium foil was used as the negative electrode, and as the electrolyte solution, there was used a solution prepared by dissolving 1 mol of LiPF6 in 1 liter of a 1:1 kneaded liquid of ethylene carbonate and methylethyl carbonate.

(2) Performance evaluation of battery

The manufactured lithium secondary battery was operated under the following conditions at room temperature to evaluate the following battery performance.

<Evaluation of cycle characteristics>

The positive electrode was subjected to charge and discharge, one cycle of the charge and discharge including operations of charging the positive electrode to 4.3 V over 5 hours at 1.0 C with a constant-current constant-voltage (CCCV) charge, followed by discharging the charged electrode to 2.7 V at a discharge rate of 0.2 C. The discharge capacity was measured for every cycle. The above cycle was repeated 20 times, and the capacity maintenance rate was calculated by the following formula from the discharge capacity at the first cycle and the 20th cycle. Note that the discharge capacity at the first cycle is referred to as the initial discharge capacity. The results are shown in Table 7.

$$\text{Capacity maintenance rate (\%) = (discharge capacity}$$

$$\text{at the 20th cycle/discharge capacity at the first cycle)}$$

$$\times 100$$

(3) Evaluation of coating stability

A positive electrode agent was prepared by mixing 91% by weight of a lithium-transition metal composite oxide obtained in any one of Examples 1 to 10 and Comparative Examples 1 to 7, 6% by weight of graphite powder, and 3% by weight of polyvinylidene fluoride, and the resulting positive electrode agent was dispersed in N-methyl-2-pyrrolidinone to prepare a kneaded paste. Ten grams of the resulting mixed paste was dropped on the upper part of a glass plate (40 cm in width x 50cm in length) inclined at 45 degrees, and the fluidity used as an index of gelation was evaluated along with the following. The results are shown together in Table 7.

Evaluation criteria of coating stability

◎: The kneaded paste flowed down from the end of the glass plate within 20 seconds.
○: The kneaded paste flowed down from the end of the glass plate in 20 seconds or more.
✕: The kneaded paste did not reach to the end of the glass plate but lost fluidity on the way.

Table 7

|  | Initial discharge capacity (mAH/g) | Capacity maintenance rate (%) | Coating stability |
|---|---|---|---|
| Example 1 | 187.1 | 90.1 | ○ |
| Example 2 | 186.4 | 92.2 | ◎ |
| Example 3 | 181.4 | 90.9 | ◎ |
| Example 4 | 191.0 | 90.2 | ◎ |
| Example 5 | 189.8 | 90.6 | ◎ |
| Example 6 | 189.6 | 90.8 | ◎ |
| Example 7 | 188.2 | 90.5 | ◎ |
| Example 8 | 160.1 | 94.6 | ◎ |
| Example 9 | 160.7 | 93.8 | ◎ |
| Example 10 | 166.7 | 96.4 | ◎ |
| Comparative Example 1 | 192.5 | 87.8 | ✕ |
| Comparative Example 2 | 191.5 | 87.9 | ✕ |
| Comparative Example 3 | 169.1 | 88.9 | ◎ |
| Comparative Example 4 | 172.8 | 92.4 | ✕ |
| Comparative Example 5 | 174.4 | 91.4 | ✕ |
| Comparative Example 6 | 175.9 | 79.2 | ✕ |
| Comparative Example 7 | 166.4 | 84.8 | ✕ |
| Comparative Example 8 | 168.0 | 80.4 | ✕ |
| Comparative Example 9 | 187.8 | 90.1 | ✕ |

The results in Table 7 show that the positive electrode active material of the present invention is excellent in coating stability, has an initial discharge of 160 (mAH/g) or more which is a practical level, and has a capacity maintenance rate of 90% or more, indicating that this positive electrode active material is excellent also in cycle characteristics. On the other hand, the positive electrode active materials in Comparative Examples 1 and 2 and Comparative Examples 4 to 9 have poor coating stability; and the positive electrode active material in Comparative Example 3 is excellent in coating stability but has a capacity maintenance rate of less than 90%, indicating that it has a problem in cycle characteristics.

Industrial Applicability

The positive electrode active material according to the present invention comprising a nickel-based lithium composite oxide suppresses gelation when kneaded with a binder resin in producing a positive electrode material and provides excellent coating properties. Therefore, the use of the positive electrode active material according to the present invention provides a lithium secondary battery excellent in cycle characteristics and safety due to reduction in generation of gas from the battery in use.

**Claims**

1. A positive electrode active material for lithium secondary batteries, comprising a lithium composite oxide containing Li, Ni, Co and Me in the relative amounts indicated by the following general formula (1):

$$Li_xNi_{1-y-z}Co_yMe_zO_2 \quad (1)$$

wherein Me represents a metal element having an atomic number of 11 or more other than Co and Ni; and x, y, and z are represented by the following formulae $0.98 \leq x \leq 1.20$, $0 < y \leq 0.5$, and $0 < z \leq 0.5$, respectively, provided that y + z < 1 and further containing Ca atoms, wherein the content of Ca atoms is 0.04 to 2.1% by weight based on the positive electrode active material; and **characterized in that** when the positive electrode active material is analyzed by X-ray diffraction using Cu-K$\alpha$ radiation as a radiation source, the intensity ratio b/a of b the diffraction peak at $2\theta$ = 18.7 $\pm$ 0.2° to a the diffraction peak at $2\theta$ = 37.4 $\pm$ 0.2° derived from CaO is from 10 to 150.

2. A method of producing the positive electrode active material for lithium secondary batteries according to claim 1, comprising mixing a compound containing nickel, cobalt, and Me atoms with a lithium compound and a calcium compound and firing the resulting mixture.

3. The positive electrode active material for lithium secondary batteries according to claim 1 or claim 2, wherein the Me represents a Mn atom or an Al atom.

4. A method for producing a positive electrode active material for lithium secondary batteries, the method comprising: mixing a compound containing nickel, cobalt, and Me, wherein Me represents a metal element having an atomic number of 11 or more other than Co and Ni, atoms with a lithium compound and a calcium compound; and firing the resulting mixture to produce a positive electrode active material containing Ca atoms, **characterized in that** one or more calcium compounds selected from the group consisting of calcium phosphate, calcium hydroxide, calcium hydrogen phosphate, calcium carbonate, calcium hypophosphite, and calcium phosphite are used as the calcium compound; and the amount of the calcium compound added is determined in the range of from 0.001 to 0.05 in terms of the molar ratio Ca/M of Ca atoms in the calcium compound to the total amount M of Ni atoms, Co atoms, and Me atoms in the compound containing nickel, cobalt, and Me atoms; and **characterized in that** the firing is a multistage firing including a firing at a temperature in the range of 200 to 400°C followed by a firing at a temperature in the range of 700 to 900°C.

5. The method for producing a positive electrode active material for lithium secondary batteries according to claim 4, wherein the compound containing nickel, cobalt, and Me atoms is a composite hydroxide containing all of the nickel, cobalt, and Me atoms.

6. The method for producing a positive electrode active material for lithium secondary batteries according to claim 4 or 5, wherein the calcium compound is calcium phosphate or calcium hydroxide.

7. A lithium secondary battery, **characterized by** using the positive electrode active material for lithium secondary batteries according to any one of claims 1 to 3.

**Patentansprüche**

1. Aktives positive für Lithium-Akkumulatorenbatterien, umfassend ein gemischtes Lithiumoxid, welches Li, Ni, Co und Me in den in der folgenden allgemeinen Formel (1) angegebenen relativen Mengen enthält:

$$Li_xNi_{1-y-z}Co_yMe_zO_2 \quad (1),$$

worin Me für ein Metallelement mit einer Ordnungszahl von 11 oder mehr außer Co une Ni steht; und x, y und z durch die folgenden Formeln $0{,}98 \leq x \leq 1{,}20$, $0 < y \leq 0{,}5$ bzw. $0 < z \leq 0{,}5$ angegeben werden mit der Maßgabe, dass y + z < 1, und welches des Weiteren Ca-Atome enthält, wobei der Gehalt an Ca-Atomen 0,04 is 2,1 Gew.-% basierend auf dem aktiven positive Elektrode-Material beträgt; und **dadurch gekennzeichnet, dass**, wenn das aktive positive Elektrode-Material durch Röntgenbeugung unter Verwendung von Cu-K$\alpha$-Strahlung als Strahlungs-quelle analysiert wird, das Intensitätsverhältnis b/a von b, dem Beugungspeak bei $2\theta = 18{,}7 \pm 0{,}2°$, zu a, dem Beugungspeak bei $2\theta = 37{,}4 \pm 0{,}2°$, abgeleitet von CaO, 10 bis 150 beträgt.

2. Verfahren zum Herstellen des aktiven positive Elektrode-Materials für Lithium-Akkumulatorenbatterien nach Anspruch 1, welches umfasst, eine Verbindung, welche Nickel-, Cobalt- und Me-Atome enthält, mit einer Lithiumverbindung und einer Calciumverbindung zu vermischen und die resultierende Mischung zu brennen.

3. Aktives positive Elektrode-Material für Lithium-Akkumulatorenbatterien nach Anspruch 1 oder Anspruch 2, wobei Me für ein Mn-Atom oder ein Al-Atom steht.

4. Verfahren zum Herstellen eines aktiven positive Elektrode-Materials für Lithium-Akkumulatorenbatterien, wobei das Verfahren umfasst: Mischen einer Verbindung, Welche Nickel-, Cobalt- und Me-Atome, wobei Me für ein Metallelement mit einer Ordnungszahl von 11 oder mehr außer Co und Ni steht, enthält, mit einer Lithiumverbindung und einer Calciumverbindung und Brennen des resultierenden Gemischs, um ein aktives positive Elektrode-Material, welches Ca-Atome enthält, herzustellen, **dadurch gekennzeichnet, dass** eine oder mehrere Calciumverbindungen, ausgewählt aus der Gruppe bestehend aus Calciumphosphat, Calciumhydroxid, Calciumhydrogenphosphat, Calciumcarbonat, Calciumhypophosphit und Calciumphosphit, als die Calciumverbindung verwendet werden; und die Menge der Calciumverbindung, welche hinzu gegeben wird, im Bereich von 0,001 bis 0,05 als das Molverhältnis Ca/M von Ca-Atomen in der Calciumverbindung zu der Gesamtmenge M von Ni-Atomen, Co-Atomen und Me-Atomen in der Nickel-, Cobalt- und Me-Atome enthaltenden Verbindung bestimmt wird; und **dadurch gekennzeichnet, dass** das Brennen ein in mehreren Stufen erfolgendes Brennen ist, welches ein Brennen bei einer Temperatur im Bereich von 200 bis 400°C, gefolgt von einem Brennen bei einer Temperatur im Bereich von 700 bis 900°C, umfasst.

5. Verfahren zum Herstellen eines aktiven positive Elektrode-Materials für Lithium-Akkumulatorenbatterien nach Anspruch 4, wobei die Nickel-, Cobalt- und Mm-atome enthaltende Verbindung ein gemischtes Hydroxid, welches alle von den Nickel-, Cobalt- und Me-Atomen enthält, ist.

6. Verfahren zum Herstellen eines aktiven positive Elektrode-Materials für Lithium-Akkumulatorenbatterien nach Anspruch 4 der 5, wobei die Calciumverbindung Calciumphosphat oder Calciumhydroxid ist.

7. Lithium-Akkumulatorenbatterie, **gekennzeichnet durch** Verwenden des aktiven positive Elektrode-Materials für Lithium-Akkumulatorenbatterien nach einem der Ansprüche 1 bis 3.

**Revendications**

1. Matière active d'électrode positive pour des batteries d'accumulateurs au lithium, comprenant un oxyde composite de lithium contenant Li, Ni, Co et Me en les quantités relatives indiquées par la formule générale (1) suivante :

$$Li_xNi_{1-y-z}Co_yMe_zO_2 \quad (1)$$

dans laquelle Me représente un élément métallique ayant un numéro atomique égal ou supérieur à 11 autre que Co et Ni ; et x, y et z sont représentés par les formules suivantes $0,98 \leq x \leq 1,20$, $0 < y \leq 0,5$, et $0 < z \leq 0,5$, respectivement, sous réserve que $y + z < 1$, et contenant en outre des atomes de Ca, dans laquelle la quantité d'atomes de Ca va de 0,04 à 2,1 % en poids sur la base de la matière active d'électrode positive ; et **caractérisée en ce que**, lorsque la matière active d'électrode positive est analysée par diffraction des rayons X en utilisant le rayonnement Ka de Cu comme source de rayonnement, le rapport des intensités b/a du pic de diffraction b à $2\theta = 18,7 \pm 0,2°$ au pic de diffraction a à $2\theta = 37,4 \pm 0,2°$ dérivé de CaO est de 10 à 150.

2. Procédé pour la production de la matière active d'électrode positive pour des batteries d'accumulateurs au lithium suivant la revendication 1, comprenant le mélange d'un composé contenant des atomes de nickel, de cobalt et de Me avec un composé de lithium et un composé de calcium et la cuisson du mélange résultant.

3. Matière active d'électrode positive pour des batteries d'accumulateurs au lithium suivant la revendication 1 ou la revendication 2, dans laquelle le Me représente un atome de Mn ou un atome de Al.

4. Procédé pour la production d'une matière active d'électrode positive pour des batteries d'accumulateurs au lithium, le procédé comprenant le mélange d'un composé contenant des atomes de nickel, de cobalt et de Me, Me représentant un élément métallique ayant un numéro atomique égal ou supérieur à 11 autre que Co et Ni, avec un composé de lithium et un composé de calcium ; et la cuisson du mélange résultant pour produire une matière active d'électrode positive contenant des atomes de Ca, **caractérisé en ce qu'**un ou plusieurs composés de calcium choisis dans le groupe consistant en le phosphate de calcium, l'hydroxyde de calcium, le phosphate acide de calcium, le carbonate de calcium, l'hypophosphite de calcium, et le phosphite de calcium sont utilisés comme composés de calcium ; et la quantité du composé de calcium ajoutée est déterminée dans l'intervalle de 0,001 à 0,05 en termes du rapport molaire Ca/M des atomes de Ca dans le composé de calcium en la quantité totale M d'atomes de Ni, d'atomes de Co et d'atomes de Me dans le composé contenant des atomes de nickel, de cobalt et de Me ; et **caractérisé en ce que** la cuisson est une cuisson en plusieurs étapes comprenant une cuisson à une température comprise dans l'intervalle de 200 à 400°C suivie par une cuisson à une température comprise dans l'intervalle de 700 à 900°C.

5. Procédé pour la production d'une matière active d'électrode positive pour des batteries d'accumulateurs au lithium suivant la revendication 4, dans lequel le composé contenant des atomes de nickel, de cobalt et de Me est un hydroxyde composite contenant tous les atomes de nickel, de cobalt et de Me.

6. Procédé pour la production d'une matière active d'électrode positive pour des batteries d'accumulateurs au lithium suivant la revendication 4 ou 5, dans lequel le composé de calcium est le phosphate de calcium ou l'hydroxyde de calcium.

7. Batterie d'accumulateurs au lithium, **caractérisé par** l'utilisation de la matière active d'électrode positive pour des batteries d'accumulateurs au lithium suivant l'une quelconque des revendications 1 à 3.

Fig. 1

Fig. 2

Fig. 3

Titrant volume (ml)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4106875 A
- WO 2004092073 A
- JP 2006286240 A
- JP 2007128719 A
- WO 2006101138 A

- JP 10081521 A
- JP 10081520 A
- JP 10029820 A
- JP 2002201028 A

**Non-patent literature cited in the description**

- **MIZUSHIMA et al.** *Material Research Bulletin,* 1980, vol. 15, 783-789